# EUROPÄISCHE PATENTSCHRIFT

(11) **EP 0 594 046 B1**
(45) Veröffentlichungstag und Bekanntmachung des Hinweises auf die Patenterteilung: **03.03.1999**
(21) Anmeldenummer: 93116538.5
(22) Anmeldetag: 13.10.1993
(51) Int. Cl.: G11B 19/02, G11B 19/12

(54) **Gerät für ein plattenförmiges optisches Speichermedium**
Apparatus for optical record carrier having a disc shape
Appareil pour support d'enregistrement optique en forme de disque

(30) Priorität: 21.10.1992 DE 4235400
(43) Veröffentlichungstag der Anmeldung: 27.04.1994
(73) Patentinhaber: Blaupunkt-Werke GmbH, 31132 Hildesheim (DE)
(72) Erfinder: Baas, Dieter, D-77694 Auenheim (DE)

(56) Entgegenhaltungen:
- EP-A- 0 510 651
- PATENT ABSTRACTS OF JAPAN vol. 13, no. 185 (P-865) 2. Mai 1989 & JP-A-01 013 255 (PIONEER ELECTRONIC CORPORATION) 18. Januar 1989

## Beschreibung

Die Erfindung betrifft ein Gerät für ein plattenförmiges optisches Speichermedium nach der Gattung des Hauptanspruchs.

Bei Geräten zur Wiedergabe und gegebenenfalls auch zur Aufnahme von Informationen von optischen Speichermedien bzw. auf optische Speichermedien, insbesondere sogenannten Compact-Discs (CDs), sind verschiedene Einrichtungen zum motorischen Einziehen oder Ausschieben des Speichermediums vorgesehen. Mit Hilfe dieser Einrichtungen gelangt das Speichermedium von einer Einführöffnung in die Arbeitsposition im Wirkungsbereich einer optischen Abtasteinrichtung. Insbesondere bei Geräten, die für einen mobilen Einsatz, beispielsweise in einem Kraftfahrzeug, konzipiert sind, ist diese Einzug- und Ausschubmechanik aufgrund der beengten Platzverhältnisse besonders kompakt und komplex ausgelegt.

Auf dem Weg von der Einführöffnung in die Arbeitsposition wird das Speichermedium zunächst senkrecht zur Drehachse bewegt, bis es konzentrisch über einer Plattenantriebsaufnahme liegt. Danach ist eine relative Bewegung in Richtung auf die Plattenantriebsaufnahme und die Abtasteinrichtung erforderlich. Dieses kann durch ein Absenken des Speichermediums oder eine entsprechende Gegenbewegung der Plattenantriebsaufnahme und der Abtasteinrichtung erfolgen. In beiden Fällen ist es erforderlich, den für diese Bewegung vorgesehenen Antrieb bei Erreichen der Arbeitsposition abzuschalten. Hierfür ist bei bekannten Geräten ein Sensor vorgesehen, der meist als mechanisch betätigter Schalter ausgebildet ist.

JP-A-01 013 255 beschreibt ein Gerät für optische Platten, indem ein Fokussiersignal in einer Fokussier-Servoschaltung vom Abtastsignal abgeleitet wird. Das Gerät detektiert, beim Auswerten des Fokussiersignals, daß eine Platte in das Gerät eingezogen ist.

Aufgabe der vorliegenden Erfindung ist es, ein Gerät für ein plattenförmiges optisches Speichermedium vorzuschlagen, bei dem das Einziehen des Speichermediums mit möglichst einfachen Mitteln zuverlässig erfolgt.

Das erfindungsgemäße Gerät mit den kennzeichnenden Merkmalen des Hauptanspruchs hat den Vorteil, daß kein Sensor für die Arbeitsposition des Speichermediums erforderlich ist. Dadurch werden die Kosten des Gerätes einerseits durch den Preis des Sensors und dessen Montage und andererseits um den Aufwand zur genauen Justierung des Sensors vermindert. Außerdem erhöht sich die Zuverlässigkeit, da jedes zusätzliche Bauteil eine potentielle Fehlerquelle darstellt.

Die Erfindung wird in ganz besonders einfacher Weise verwirklicht, wenn das bei den bekannten Geräten übliche Fokussiersignal (FZC = Focus-zero-cross) verwendet wird.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines erfindungsgemäßen Gerätes,
- Fig. 2: eine Ansicht eines an sich bekannten Gerätes und
- Fig. 3: ein Ablaufdiagramm eines Programms zur Beendung der Absenkbewegung.

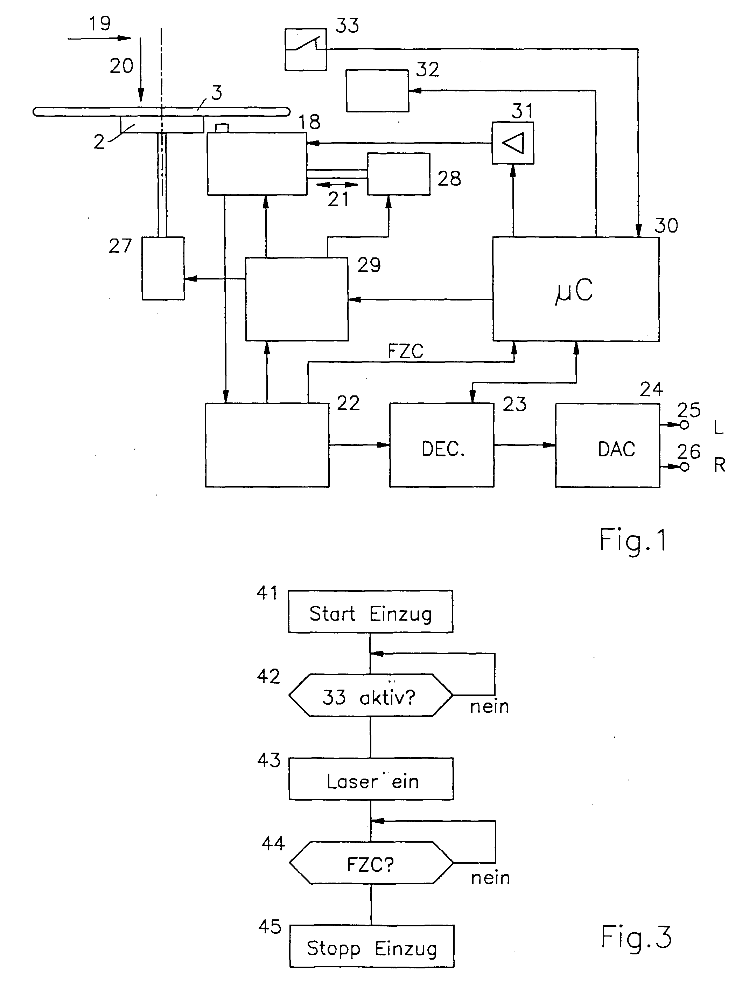

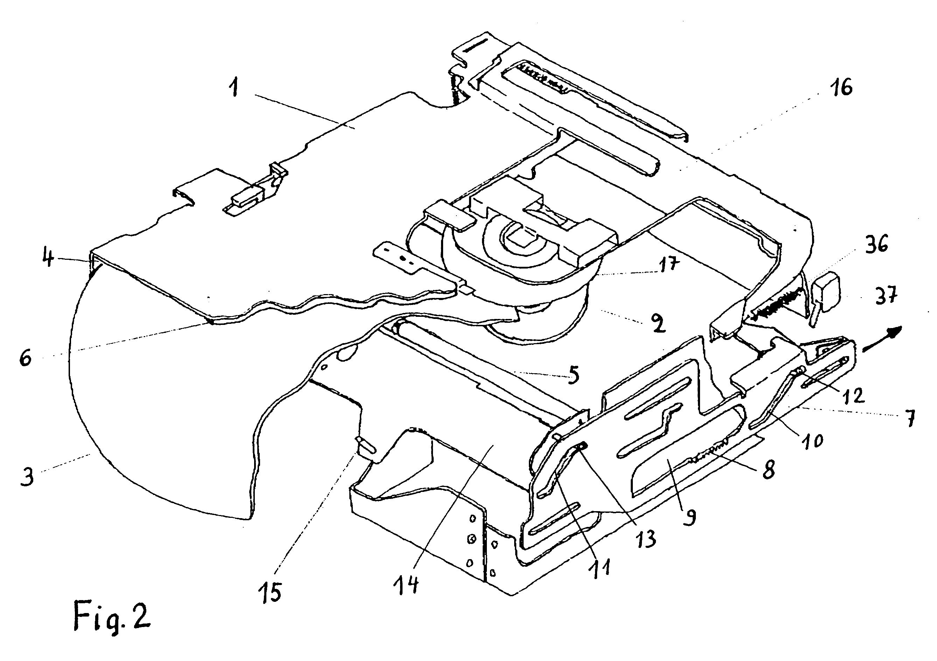

Gleiche Teile sind in den Figuren mit gleichen Bezugszeichen versehen. Bevor das Ausführungsbeispiel anhand der Figuren 1 und 3 erläutert wird, erfolgt eine Beschreibung des in Fig. 2 perspektivisch dargestellten bekannten Gerätes, wobei lediglich diejenigen Teile dargestellt sind, welche zur Erläuterung der Bewegung des Speichermediums - im folgenden Platte genannt - in die Arbeitsposition erforderlich sind. Um einen Einblick in das Gerät zu gewähren, sind einige Teile aufgeschnitten dargestellt.

Innerhalb eines Laufwerkgehäuses 1 befindet sich eine Plattenantriebsaufnahme 2, die in nicht dargestellter Weise zum Abtasten der Platte in Rotation versetzt wird. Die Platte 3 wird durch eine schlitzförmige Einführungsöffnung 4 in das Gerät eingeführt. Dabei gelangt sie zwischen eine motorisch antreibbare Walze 5 und eine innen an der oberen Wand des Laufwerkgehäuses 1 angebrachte Führungsvorrichtung 6. Durch geeignete Sensoren wird der Antrieb für die Walze 5 eingeschaltet, so daß die Platte 3 bis zu einer Position senkrecht über der Plattenantriebsaufnahme 2 eingezogen wird.

Für das anschließende Absenken der Platte wird ein Absenkschieber 7 motorisch in Richtung des Pfeils bewegt. Der Übersichtlichkeit halber ist der motorische Antrieb des Schiebers 7 nicht dargestellt. Er erfolgt über eine Linearverzahnung 8, die am Rande einer Aussparung 9 des Schiebers 7 angeordnet ist.

Der Schieber 7 weist Kulissenführungen 10, 11 auf, in welche Mitnehmer 12, 13 eingreifen, die bei einer Bewegung des Schiebers 7 in Pfeilrichtung nach unten bewegt werden.

Der Mitnehmer 13 ist Teil einer Haltevorrichtung 14 für die Walze 5. An der Haltevorrichtung 14 befindet sich ferner ein Stift 15. Durch die Bewegung des Mitnehmers 13 nach unten wird die Haltevorrichtung 14 derart gekippt, daß auch die Walze 5 zur Absenkung der Platte nach unten bewegt wird und daß der Stift 15 die Einführungsöffnung 4 verschließt.

Der Mitnehmer 12 steht in Wirkverbindung mit einem Plattenklemmbügel 16, der eine obere nicht angetriebene Plattenaufnahme 17 trägt. Entgegen der Kraft einer Feder 36 wird bei einer Bewegung des Schiebers 7 in Pfeilrichtung der Plattenklemmbügel 16 derart gekippt, daß sich die obere Plattenaufnahme 17 mit der Platte nach unten bewegt. Erreicht die Platte ihre Arbeitsposition, so wird ein Schalter 37 betätigt, der den Antrieb des Schiebers 7 abschaltet.

Ein derartiger Schalter kann mit Hilfe der im folgenden anhand des Ausführungsbeispiels gemäß den Figuren 1 und 3 erläuterten Erfindung eingespart werden. Bei dem Blockschaltbild nach Fig. 1 stellt 18 eine an sich bekannte Abtasteinrichtung für CD-Geräte dar, die einen Laser, mehrere opto-elektrische Wandler und Einrichtungen zur Fokussierung und Spurnachführung enthält. Der vom Laser erzeugte Lichtstrahl ist auf die Platte 3 gerichtet, die zunächst in Richtung des Pfeils 19 und dann in Richtung des Pfeils 20 in die dargestellte Arbeitsposition gebracht ist. Die Abtasteinrichtung 18 ist radial in der mit dem Doppelpfeil 21 angedeuteten Richtung bewegbar.

Das Ausgangssignal der Abtasteinrichtung 18 wird einer Schaltung 22 zur Signalaufbereitung zugeführt, die im wesentlichen eine Verstärkung, eine Filterung und eine Aufspaltung in ein Datensignal und verschiedene Hilfssignale vornimmt, von denen das eine Signal ein Fokussiersignal FZC ist. Eine derartige Schaltung ist als integrierter Schaltkreis beispielsweise unter der Typenbezeichnung LA9210 von der Firma Sanyo erhältlich. In den Unterlagen der Herstellerin ist das dem Signal FZC entsprechende Signal als FZD (= Focus-zero-detector)-Signal bezeichnet.

Das Datensignal wird über einen Decoder 23 einem digitalen Filter und Digital/Analog-Wandler 24 zugeführt, an dessen Ausgängen 25, 26 analoge Audiosignale L und R anstehen.

Zur Steuerung der Fokussierung, der Spurnachführung, des Plattenantriebs 27 sowie eines Grob-Radialantriebs 28 sind verschiedene Servoschaltungen vorgesehen, die in Fig. 1 schematisch als eine Servoschaltung 29 dargestellt sind. Die Servoschaltung 29 erhält von der Schaltung 22, vom Decoder 23 und von einem Mikrocomputer 30 Signale. Der Mikrocomputer 30 dient zur Steuerung des gesamten Gerätes, unter anderem zur Steuerung des Einzug- und Ausschubvorgangs, zur Programmierung der Abspielreihenfolge verschiedener auf der Platte befindlicher Stücke und zum Erkennen und Anzeigen von Fehlern.

Der Mikrocomputer 30 ist außer mit der Servoschaltung 29 mit dem Decoder 23 und mit der Schaltung 22 verbunden, von wo er das Fokussiersignal FZC erhält. Ein Ausgang des Mikrocomputers 30 ist an den Eingang eines Treibers 31 für den in der Abtasteinrichtung 18 befindlichen Laser angeschlossen. Über einen weiteren Ausgang des Mikrocomputers 30 ist der Antrieb 32 für die Einzug- bzw. Ausschubeinrichtung steuerbar. Außerdem können einem Eingang des Mikrocomputers 30 Signale von Sensoren der Einzug- bzw.

Ausschubeinrichtung zugeführt werden. Beispielhaft ist in Fig. 1 ein Schalter 33 dargestellt, der dem Mikrocomputer mitteilt, wenn die Platte 3 in einer konzentrischen Position über der Plattenantriebsaufnahme 2 angekommen ist.

Fig. 3 stellt ein Programm zur Beendung der Absenkbewegung dar, das neben einer Reihe von anderen Programmen in einem Nur-Lesespeicher des Mikrocomputers 30 (Fig. 1) abgelegt ist. Nach einem Start bei 41 erfolgt eine Verzweigung 42 in Abhängigkeit davon, ob der Schalter 33 (Fig. 1) aktiv ist, das heißt, ob sich die Platte über der Plattenantriebsaufnahme befindet. Solange dieses nicht der Fall ist, wird eine Schleife durchlaufen. Ist jedoch der Schalter 33 aktiv, wird bei 43 der Laser eingeschaltet. Danach wird das Programm bei 44 in Abhängigkeit davon verzweigt, ob durch das Fokussiersignal FZC angezeigt wird, daß sich die Platte im Fokussierbereich der Abtasteinrichtung 18 befindet. Ist dieses der Fall, wird bei 45 der Antrieb für das Absenken ausgeschaltet.

Fig. 3 stellt lediglich ein Beispiel für ein Programm zum Beenden des Absenkvorganges dar. Das Programm kann an die jeweils vorliegenden Bedingungen bezüglich der Einzugmechanik angepaßt werden. So kann beispielsweise der Laser bereits beim Starten des Einzugvorganges eingeschaltet werden, wenn für den Übergang zwischen einer Bewegung senkrecht zur Drehachse und dem Absenken kein spezieller Sensor vorgesehen ist.

## Patentansprüche

1. Gerät für ein plattenförmiges optisches Speichermedium mit einer Datenabtasteinrichtung, wobei das zugeführte Speichermedium mindestens in Richtung der Drehachse bewegbar ist, um in eine Arbeitsposition im Wirkungsbereich einer optischen Abtasteinrichtung zu gelangen, wobei zur Ableitung eines Signals, wenn sich das Speichermedium (3) in der Arbeitsposition befindet, ein von der Datenabasteinrichtung (18) erzeugtes Signal ausgewertet wird, dadurch gekennzeichnet, daß dieses Signal zur Beendigung der Bewegung des Speichermediums (3) dient.

2. Gerät nach Anspruch 1, dadurch gekennzeichnet, daß ein mit Hilfe der Abtasteinrichtung (18) erzeugtes Fokussiersignal ausgewertet wird.

3. Gerät nach Anspruch 1, dadurch gekennzeichnet, daß ein zu der Abtasteinrichtung (18) gehörender Laser durch Mittel (33) eingeschaltet wird, die auch die Bewegung in Richtung der Drehachse einleiten.

4. Gerät nach Anspruch 1, dadurch gekennzeichnet, daß ein zu der Abtasteinrichtung gehörender Laser durch Mittel eingeschaltet wird, die bei einer Zuführung des Speichermediums in eine Einführöffnung ansprechen.

## Claims

1. Apparatus for an optical storage medium in disc form, having a data scanning device, the storage medium fed in being movable at least in the direction of the axis of rotation in order to attain an operating position in the region of action of an optical scanning device, a signal generated by the data scanning device (18) being evaluated in order to derive a signal when the storage medium (3) is in the operating position, characterized in that this signal is used for ending the movement of the storage medium (3).

2. Apparatus according to Claim 1, characterized in that a focusing signal generated with the aid of the scanning device (18) is evaluated.

3. Apparatus according to Claim 1, characterized in that a laser belonging to the scanning device (18) is switched on by means (33) which also initiate the movement in the direction of the axis of rotation.

4. Apparatus according to Claim 1, characterized in that a laser belonging to the scanning device is switched on by means which respond when the storage medium is fed into an insertion opening.

## Revendications

1. Appareil pour un support d'enregistrement optique en forme de disque comportant une installation de détection de données,
le support d'enregistrement fourni est mobile au moins dans la direction de l'axe de rotation pour arriver dans une position active, dans la zone d'action d'une installation de détection optique, et pour déduire un signal lorsque le support d'enregistrement (3) occupe la position active, on exploite un signal généré par l'installation de détection de données (18),
caractérisé en ce que
ce signal sert à terminer le mouvement du support d'enregistrement (3) .

2. Appareil selon la revendication 1,
caractérisé en ce qu'
il exploite un signal de focalisation généré par l'installation de détection (18)

3. Appareil selon la revendication 1,
caractérisé en ce qu'
il branche un laser faisant partie de l'installation de détection (18) par des moyens (33) qui assurent également le mouvement dans le sens de l'axe de rotation.

4. Appareil selon la revendication 1,
caractérisé en ce qu'
il branche un laser appartenant à l'installation de détection par des moyens mis en oeuvre par l'introduction du support d'enregistrement dans un orifice d'introduction .
